# EUROPÄISCHE PATENTANMELDUNG

(11) **EP 3 220 121 A1**
(43) Veröffentlichungstag der Anmeldung: **20.09.2017**
(21) Anmeldenummer: 16160212.3
(22) Anmeldetag: 14.03.2016
(51) Int. Cl.: G01M 13/02

(54) **ULTRASCHALLPRÜFKOPFADAPTER FÜR VERZAHNTE PRÜFKÖRPER**

(71) Anmelder: WPT Nord GmbH, 24159 Kiel (DE)
(72) Erfinder: Thomsen, Ralf, 24229 Schwedeneck (DE)
(74) Vertreter: Grünecker Patent- und Rechtsanwälte PartG mbB

(57) **Zusammenfassung**

Die Erfindung betrifft einen Ultraschallprüfkopfadapter für eine Ultraschallprüfung von verzahnten Prüfkörpern, ein Ultraschallprüfverfahren, und ein Ultraschallprüfsystem zur Detektion von Fehlstellen in verzahnten Prüfkörpern. Insbesondere betrifft die Erfindung einen Ultraschallprüfkopfadapter (1, 1') für eine Ultraschallprüfung von verzahnten Prüfkörpern, insbesondere von außenverzahnten Prüfkörpern (100, 100', 101), umfassend eine Prüfkopfseite (10, 10'), welche während einer Ultraschallprüfung vorzugsweise einem Prüfkörper (100, 100', 101) abgewandt ist, eine Prüfkörperseite (20, 20'), welche während einer Ultraschallprüfung vorzugsweise einem Prüfkörper (100, 100', 101) zugewandt ist, wobei die Prüfkopfseite (10, 10') und Prüfkörperseite (20, 20') jeweils eine Längserstreckung (L) aufweisen, eine Dicke (D), welche sich von der Prüfkopfseite (10, 10') zur Prüfkörperseite (20, 20') erstreckt, eine Breite (B), welche sich orthogonal zur Dicke (D) und orthogonal zur Längserstreckung der Prüfkopfseite (10, 10') und/oder zur Längserstreckung der Prüfkörperseite (20, 20') erstreckt, wobei auf der Prüfkörperseite (20, 20') eine Prüfverzahnung (21) angeordnet ist.

## Beschreibung

Die Erfindung betrifft einen Ultraschallprüfkopfadapter für eine Ultraschallprüfung von verzahnten Prüfkörpern, ein Ultraschallprüfverfahren, und ein Ultraschallprüfsystem zur Detektion von Fehlstellen in verzahnten Prüfkörpern.

Die Ultraschallprüfung gehört zu den zerstörungsfreien Prüfmethoden, wobei die Ultraschallprüfung insbesondere das Auffinden von Fehlstellen in und/oder an einem Material mittels Ultraschall umfasst. Durch die Anwendung der Ultraschallprüfung als akustisches Verfahren lassen sich Bauteile auch im eingebauten beziehungsweise im nicht zerstörten Zustand prüfen. Das Prinzip der Ultraschallprüfung beruht zumindest darauf, dass sich in unterschiedlichen Medien die von einem Ultraschallgerät ausgesandten Schallwellen unterschiedlich schnell ausbreiten.

Die Ultraschallprüfung wird insbesondere für Materialien eingesetzt, die ein schallleitfähiges Verhalten aufweisen. Die Ultraschallprüfung dient insbesondere der Auffindung von inneren und äußeren Fehlstellen, beispielsweise in Schweißnähten, Schmiedestücken und/oder Gussbauteilen. Das Ultraschallverfahren dient ferner zur Erkennung von Fehlstellen, die sich im Inneren eines Materials beziehungsweise eines Bauteils befinden. Fehlstellen können beispielsweise Einschlüsse, Risse, Lunker, Trennstellen und/oder die Existenz von Grenzflächen sein.

Bei der Ultraschallprüfung wird unter anderem ein Sende- und/oder Empfangskopf eingesetzt, der Ultraschallsignale bzw. Ultraschallimpulse aussendet. Der Sende- und/oder Empfangskopf sendet und/oder empfängt beispielsweise Longitudinalwellen. Beim Eintritt der Schallwelle aus dem Ultraschallprüfkopf in das Material tritt eine Wellentransformation ein. Geprüft wird in der Regel mit einer Transversalwelle. Die Schallgeschwindigkeiten für beide Wellenformen in einem Material sind unterschiedlich. Die Longitudinalwelle ist in der Regel stets schneller.

Bei diesem Ultraschallverfahren, auch Reflexionsschallverfahren oder auch Impulsechoverfahren genannt, ist die kleinste Fehlstelle, die dargestellt werden kann, größer als die halbe Wellenlänge der ausgesandten Schallwelle, die abhängig von der Schallgeschwindigkeit des Materials und der Frequenz des Ultraschallprüfkopfes ist. Die Frequenzhöhe kann jedoch nicht unbegrenzt gesteigert werden, da die Korngrenzen des Gefüges eines Materials zur Streuung und Absorption führen können und sich somit die Eindringtiefe verringert. Bei Materialien mit einer groben Kristallstruktur kann demnach keine hohe Frequenz genutzt werden, da die einzelnen Korngrenzen ein Ultraschallsignal zu stark beeinflussen. Fehlstellen verursachen ein abweichendes Reflexionsverhalten der Schallwellen, so dass das Reflexionsverhalten zur Detektion der Fehlstellen genutzt werden kann.

Für die Ultraschallprüfung von Zahnrädern bestehen verschiedene Anforderungen. Insbesondere ist es eine Anforderung auch sehr feine Fehlstellen, beispielsweise Risse im Inneren des Materials, zu erkennen. Darüber hinaus ist es eine Herausforderung, die Ultraschallimpulse mit einer entsprechenden Genauigkeit in das Material des verzahnten Bauteils einzuleiten. Dies erklärt sich insbesondere durch die nicht glatte beziehungsweise ebene Oberfläche eines Zahnrades, die sich vielmehr durch die Aneinanderreihung von einzelnen Zähnen auszeichnet. Die im Stand der Technik bekannten Ultraschallprüfvorrichtungen und Ultraschallverfahren zur Prüfung von verzahnten Bauteilen bieten verschiedene Vorteile, jedoch sind verbesserte Vorrichtungen und Verfahren wünschenswert.

Eine Ultraschallprüfung von verzahnten Bauteilen, insbesondere von Zahnrädern, die eine Außenverzahnung aufweisen, mit den im Stand der Technik bekannten Vorrichtungen weist verschiedene Nachteile auf, was sich insbesondere in einer schlechteren Detektion von Fehlstellen äußert. Dies ist insbesondere dadurch zu erklären, dass durch die Verzahnung eine homogene Einleitung der Ultraschallimpulse schwierig ist. Ferner ist die Prüfung von verzahnten Bauteilen mit den bekannten Vorrichtungen und Verfahren mit personal- und zeitintensiven Vorgängen verbunden, die lediglich eingeschränkt automatisiert werden können.

Es ist daher eine Aufgabe der vorliegenden Erfindung einen Ultraschallprüfkopfadapter, ein Ultraschallprüfverfahren und ein Ultraschallprüfsystem bereitzustellen, welche eine oder mehrere der genannten Nachteile vermindern oder beseitigen. Insbesondere ist es eine Aufgabe der vorliegenden Erfindung einen Ultraschallprüfkopfadapter, ein Ultraschallprüfverfahren und ein Ultraschallprüfsystem bereitzustellen, welche eine verbesserte und/oder vereinfachte Detektion von Fehlstellen in Bauteilen, insbesondere in Bauteilen von Windenergieanlagen, insbesondere von verzahnten Bauteilen, beispielsweise Blattlager, bereitzustellen.

Die Aufgabe wird gemäß einem ersten Aspekt der Erfindung gelöst durch einen Ultraschallprüfkopfadapter für eine Ultraschallprüfung von außenverzahnten Prüfkörpern, insbesondere von verzahnten Bauteilen von Windenergieanlagen, vorzugsweise von Blattlagern von Windenergieanlagen, umfassend eine Prüfkopfseite, welche während einer Ultraschallprüfung vorzugsweise einen Prüfkörper abgewandt ist, eine Prüfkörperseite, welche während einer Ultraschallprüfung vorzugsweise einem Prüfkörper zugewandt ist, wobei die Prüfkopfseite und Prüfkörperseite jeweils eine Längserstreckung aufweisen, eine Dicke, welche sich von der Prüfkopfseite zur Prüfkörperseite erstreckt, eine Breite, welche sich orthogonal zur Dicke und orthogonal zur Längserstreckung der Prüfkopfseite und/oder zur Erstreckung der Prüfkörperseite erstreckt, wobei auf der Prüfkörperseite eine Prüfverzahnung angeordnet ist.

Der Erfindung liegt der Erkenntnis zugrunde, dass eine Ultraschallprüfung verbessert werden kann, indem ein Ultraschallprüfkopfadapter angewendet wird, der auf seiner prüfkörperseitigen Seite eine Negativform des Prüfkörpers, also dem zu prüfenden Bauteil, aufweist. Im vorliegenden Fall weist der Ultraschallprüfkopfadapter daher teilweise oder vollständig die Negativform eines Zahnrades auf, sodass die prüfkörperzugewandte Seite ebenfalls eine Verzahnung aufweist.

Da während einer Ultraschallprüfung in der Regel ein Ultraschallprüfkopf angewendet wird, ist eine Seite des Ultraschallprüfkopfadapters während einer Ultraschallprüfung diesem Ultraschallprüfkopf zugewandt. Diese Prüfkopfseite des Ultraschallprüfkopfadapters ist insbesondere derart ausgebildet, dass diese geeignet ist für das Anordnen und/oder Verfahren eines Ultraschallprüfkopfes. Da der Ultraschallprüfkopfadapter vorzugsweise zwischen einem Ultraschallprüfkopf und einem Prüfkörper angeordnet ist, ist die Prüfkopfseite dem Ultraschallprüfkopf zugewandt und somit vom Prüfkörper abgewandt.

Im Gegensatz zur Prüfkopfseite ist die Prüfkörperseite dem Prüfkörper zugewandt. Der Prüfkörper ist das mittels Ultraschall zu prüfende Bauteil, insbesondere außenverzahnte Prüfkörper, beispielsweise Zahnräder und/oder verzahnte Bauteile von Windenergieanlagen, vorzugsweise Blattlager von Windenergieanlagen. Aus diesem Grund ist die Prüfkörperseite auch dahingehend ausgebildet eine Ultraschallprüfung an einem Prüfkörper zuzulassen, insbesondere dahingehend, dass die Prüfkörperseite eine Geometrie aufweist, die im Wesentlichen einer Negativform des Prüfkörpers und/oder einer Negativform der Oberfläche des Prüfkörpers entspricht.

Der Ultraschallprüfkopfadapter weist ferner die Längserstreckung der Prüfkörperseite und die Längserstreckung der Prüfkopfseite auf, die vorzugsweise und im Wesentlichen eine gleiche Ausrichtung aufweisen. Da die Prüfkörperseite und/oder die Prüfkopfseite auch gekrümmte Flächen aufweisen können, kann sich die Ausrichtung dieser Längserstreckungen teilweise oder vollständig auch unterscheiden.

Ferner weist der Ultraschallprüfkopfadapter eine Dicke auf, welche sich vorzugsweise von der Prüfkopfseite zur Prüfkörperseite erstreckt und ferner vorzugsweise orthogonal zur Längserstreckung der Prüfkörperseite und/oder zur Längserstreckung der Prüfkopfseite ausgerichtet ist. Die Dicke muss nicht konstant sein, sondern kann entlang einer der Längserstreckungen und/oder entlang einer Breite variieren. Diese Breite ist orthogonal zur Dicke und orthogonal zur Längserstreckung der Prüfkopfseite und/oder zur Längserstreckung der Prüfkörperseite angeordnet.

Ein Grundkörper, ausgebildet durch die Längserstreckung der Prüfkopfseite und der Längserstreckung der Prüfkörperseite, die Dicke und die Breite, kann demnach rechteckige Querschnitte aufweisen, aber auch gebogene Querschnitte. Gebogene Querschnitte entstehen insbesondere dann, wenn der Grundkörper des Ultraschallprüfkopfadapters als Ringsegment ausgebildet ist. Dabei ist es insbesondere bevorzugt, dass die ringausbildende Erstreckung die Längserstreckung der Prüfkopfseite und/oder die Längserstreckung der Prüfkörperseite ist. Durch eine variierende Dicke des Grundkörpers können die Prüfkörperseite und/oder die Prüfkopfseite konkav und/oder konvex ausgebildet sein. Eine konkave und/oder konvexe Prüfkörperseite und/oder Prüfkopfseite kann jedoch auch bei konstanter Dicke entstehen, beispielsweise wenn der Grundkörper als Ringsegment mit einer kontanten Beabstandung der Prüfkörperseite von der Prüfkopfseite ausgebildet ist.

Erfindungsgemäß ist auf der Prüfkörperseite die Prüfverzahnung angeordnet. Die Prüfverzahnung ist ausgebildet als ein Zahn, zwei Zähne oder mehrere Zähne. Insbesondere ist unter einer Prüfverzahnung eine Nebeneinanderreihung von zwei oder mehreren Zähnen zu verstehen, sodass eine Zahnreihe gebildet wird. Diese Zähne weisen dabei die üblichen im Stand der Technik bekannten geometrischen Eigenschaften auf. Insbesondere ist es bevorzugt, dass die Verzahnung eine Negativform einer zu prüfenden Verzahnung eines Prüfkörpers darstellt. Die Zähne der Prüfverzahnung sind ferner auf der Prüfkörperseite angeordnet. Der Ultraschallprüfkopfadapter wird demgemäß durch die Verzahnung, insbesondere durch die Höhe der Zähne in Richtung der Dicke, entlang der Längserstreckung der Prüfkörperseite vollständig oder abschnittsweise verdickt. Die Zähne können in Bezug auf ihre jeweils größte Zahndicke direkt aneinander angeordnet oder voneinander beanstandet sein.

Die Gesamthöhe des Ultraschallprüfkopfadapters in Richtung der Dicke wird dadurch einerseits durch die Dicke des Grundkörpers bestimmt und andererseits durch eine Höhe, insbesondere eine Kopfhöhe, der auf dem Grundkörper angeordneten Zähne. Je nach Art der zu prüfenden Verzahnung am Prüfkörper kann die Prüfverzahnung am Ultraschallprüfkopfadapter unter anderem eine Evolventenverzahnung, eine Zykloidenverzahnung und/oder eine Triebstockverzahnung aufweisen. Ferner kann die Prüfverzahnung vorzugsweise eine Geradverzahnung oder eine Schrägverzahnung aufweisen. Unabhängig von der Art der Verzahnung, ist ein Zahn einer Verzahnung zumindest durch seine Kopfhöhe und seine Breite ausgebildet.

Der Ultraschallprüfkopfadapter kann demnach an einem Prüfkörper, insbesondere an einem Prüfkörper mit einer Außenverzahnung, angeordnet werden. Durch die vorzugsweise nicht verzahnte Prüfkopfseite kann an der Prüfkopfseite ein Ultraschallprüfkopf eines Ultraschallgeräts angeordnet und/oder verfahren werden. Daher gelangen vom Ultraschallprüfkopf ausgesandte Ultraschallsignale durch den Ultraschallprüfkopfadapter hindurch in den Prüfkörper hinein. Durch die Anordnung und/oder das Verfahren des Ultraschallprüfkopfes an einer vorzugsweise nicht verzahnten Prüfkopfseite kann die Ultraschallprüfung dahingehend verbessert werden, dass die Einleitung der Ultraschallsignale in den Prüfkörper optimiert ist. Ferner kann das Anordnen und/oder Verfahren des Ultraschallprüfkopfes vereinfacht werden, da der Ultraschallprüfkopf beispielsweise eine im Wesentlichen translatorische Bewegung, vorzugsweise in Längsrichtung des Ultraschallprüfkopfadapters, ausführen muss. Daraus kann beispielsweise resultieren, dass das Ultraschallprüfverfahren mit einer geringeren Fehleranfälligkeit und/oder vereinfacht und/oder automatisiert ausgeführt werden kann.

In einer bevorzugten Ausführungsvariante des Ultraschallprüfkopfadapters umfasst der Ultraschallprüfkopfadapter ein Plexiglas oder besteht aus diesem. Plexiglas, auch als Acrylglas bezeichnet, ist Polymethylmethacrylat, kurz PMMA. Plexiglas kann als transparentes oder als nicht transparentes Material vorliegen. Plexiglas eignet sich unter anderem für die vorliegende Anwendung, da Plexiglas ein Material ist, das gut formbar ist. Ferner ist Plexiglas einfach, beispielsweise spanend, zu bearbeiten, sodass die Herstellung von Ultraschallprüfkopfadaptern, die aus Plexiglas hergestellt sind oder Plexiglas umfassen, kostengünstig zu erreichen ist.

In einer weiteren bevorzugten Ausführungsform des Ultraschallprüfkopfadapters sind die Prüfkörperseite und die Prüfkopfseite gegenüberliegend voneinander angeordnet. Das bedeutet insbesondere, dass die Prüfkörperseite und die Prüfkopfseite jenseits voneinander angeordnet sind.

In einer weiteren besonders bevorzugten Ausführungsform des Ultraschallprüfkopfadapters ist die Prüfkörperseite als konkave Fläche ausgebildet. Eine konkave Fläche ist dadurch charakterisiert, dass die Fläche nach innen gewölbt ist. Dadurch ist diese Fläche in der Regel auch durch einen Radius zu beschreiben. Eine derart konkav gekrümmte Prüfkörperseite ist dahingehend vorteilhaft, dass diese die Negativform einer konvexen Fläche darstellt. Da ein außenverzahntes Zahnrad in der Regel einen kreisrunden Querschnitt aufweist, wobei die Verzahnung an der Außenumfangsfläche angeordnet ist, und somit an der zu prüfenden Fläche in der Regel eine konvexe Fläche aufweist, ist der Ultraschallprüfkopfadapter mit einer konkav gewölbten Prüfkörperseite vorteilhaft für die Ultraschallmessung eines Prüfkörpers, insbesondere eines außenverzahnten Zahnrades, geeignet.

In einer weiteren bevorzugten Ausführungsform des Ultraschallprüfkopfadapters ist die Prüfkörperseite als konvexe Fläche ausgebildet, die also eine nach außen gewölbte Fläche aufweist. Ein Ultraschallprüfkopfadapter mit einer konvexen Prüfkörperseite ist insbesondere für die Ultraschallmessung eines Innengewindes geeignet. Ein Innengewinde ist insbesondere auf einer Innenumfangsfläche eines Bauteils angeordnet.

In einer besonders bevorzugten Ausführungsform des Ultraschallprüfkopfadapters ist vorgesehen, dass dieser als Ring ausgebildet ist, sodass die Prüfkopfseite die Außenumfangsfläche und die Prüfkopfseite die Innenumfangsfläche ausbildet. Ein derartiger Ultraschallprüfkopfadapter hat demnach eine ringausbildende Geometrie, wobei die Umfangsflächen geschlossen und somit durchgängig sind. Vorzugsweise werden derartige Ultraschallprüfkopfadapter zur Prüfung von Zahnrädern verwendet, wobei diese Zahnräder einen geringeren Durchmesser, insbesondere einen geringeren Fußkreisdurchmesser, aufweisen als der als Ring ausgebildete Ultraschallprüfkopfadapter. Somit bedarf es lediglich einer einzigen Anordnung des Ultraschallprüfkopfadapters an einem Prüfkörper und einem anschließenden Verfahren der Außenumfangsfläche beziehungsweise der Prüfkopfseite des Ultraschallprüfkopfadapters mit einem Ultraschallprüfkopf. In einer weiteren Ausführungsvariante einer bevorzugten Ausführungsform ist der Ultraschallprüfkopfadapter als Teilringsegment ausgebildet, der entgegen der zuvor erläuterten Ausführungsform keinen vollständigen Ring ausbildet sondern lediglich einen Abschnitt eines Rings, beispielsweise 270 Bogengrad als Dreiviertelsegment oder 180 Bogengrad als Halbbogensegment. Die Umfangsflächen sind demnach abschnittsweise offen und somit nicht durchgängig.

In einer weiteren besonders bevorzugten Ausführungsform des Ultraschallprüfkopfadapters ist vorgesehen, dass die Verzahnung im Wesentlichen entlang der gesamten Erstreckung der Prüfkörperseite angeordnet ist. Diese Ausführungsform resultiert darin, dass entlang der Prüfkörperseite Zähne, gegebenenfalls mit Beabstandungen, angeordnet sind. Grundsätzlich ist es allerdings auch hier möglich, dass an den Enden des Ultraschallprüfkopfadapters beziehungsweise an Bereichen, die an diese Enden grenzen, beispielsweise an den Enden zwischen den sich die Längserstreckung des Ultraschallprüfkopfadapters erstreckt, keine Zähne angeordnet sind.

In einer weiteren besonders bevorzugten Ausführungsform des Ultraschallprüfkopfadapters ist vorgesehen, dass die Zahndicken von Zähnen der Verzahnung im Wesentlichen parallel zur Längserstreckung der Prüfkörperseite verlaufen. Im Falle einer gewölbten Prüfkörperseite ist die Ausrichtung der Zahndicken vorzugsweise parallel zu einer Tangente der Prüfkörperseite, welche an dem Punkt angeordnet ist, an dem eine zahnflankenhalbierende Gerade auf die Prüfkörperseite trifft.

Gemäß einer weiteren Ausführungsvariante des Ultraschallprüfkopfadapters, ist die Prüfkopfseite derart ausgebildet, dass ein Ultraschallprüfkopf angeordnet und/oder verfahren werden kann. Vorzugsweise ist demnach an der Prüfkopfseite keine Verzahnung vorhanden. Ferner vorzugsweise ist die Prüfkopfseite zum Anordnen und/oder Verfahren eines Ultraschallprüfkopfes im Wesentlichen glatt. Eine im Wesentlichen glatte Oberfläche hat insbesondere den Vorteil, dass die in den Ultraschallprüfkopfadapter gesendeten Ultraschallimpulse nicht verfälscht werden. Ferner vorzugsweise weist die Oberfläche eine überwiegend homogene Struktur auf. Diese Struktur kann beispielsweise eine gewisse Rauigkeit umfassen. Ferner ist es bevorzugt, dass die Prüfkopfseite in dieser Ausführungsvariante keine scharfkantigen Strukturen und/oder Einkerbungen aufweist.

In einer weiteren besonders bevorzugten Ausführungsform des Ultraschallprüfkopfadapters ist vorgesehen, dass die Prüfkopfseite als plane Fläche ausgebildet ist. Eine derartige plane Fläche ist insbesondere dadurch gekennzeichnet, dass diese keine wesentliche Krümmung aufweist. Eine Fläche die im Wesentlichen keine Krümmung aufweist, zeichnet sich mathematisch durch einen Radius von unendlich auf. Über eine derartige plane Fläche der Prüfkopfseite kann daher ein Ultraschallprüfkopf einfach mit einer hohen Genauigkeit und/oder Geschwindigkeit verfahren werden, sodass die von dem Ultraschallprüfkopf ausgeführte Prüfung mit einer hohen Genauigkeit und einem geringeren Aufwand ausgeführt werden kann.

In einer weiteren bevorzugten Ausführungsvariante des Ultraschallprüfkopfadapters ist vorgesehen, dass die Prüfkopfseite als konvexe und/oder konkave Fläche ausgebildet ist. Konvexe, d. h. nach außen gekrümmte Flächen, oder konkave, d. h. nach innen gekrümmte Flächen, bieten verschiedene Vorteile.

Aufgrund des entstehenden Radius bei konvexen und konkaven Flächen kann ein Ultraschallprüfkopf in der Regel weiterhin mit der notwendigen Genauigkeit über die Prüfkopfseite verfahren. Darüber hinaus können konvexe und/oder konkave Flächen an der Prüfkopfseite die Ultraschallprüfung weiter verbessern. Dies kann sich insbesondere durch eine verbesserte Impulsausbreitung im Ultraschallprüfkopfadapter und/oder in dem unter dem Ultraschallprüfkopfadapter angeordneten Prüfkörper auszeichnen. Darüber hinaus kann durch eine konvex und/oder konkav ausgebildete Prüfkopfseite die Dicke des Ultraschallprüfkopfadapters entlang seiner Längserstreckung konstant bleiben, insbesondere für den Fall, dass die Prüfkörperseite eine konvex und/oder konkav ausgebildete Fläche aufweist.

Gemäß einem weiteren Aspekt der vorliegenden Erfindung wird die eingangs genannte Aufgabe gelöst durch ein Ultraschallprüfverfahren zur Detektion von Fehlstellen für verzahnte Prüfkörper, insbesondere von außenverzahnten Prüfkörpern, insbesondere von verzahnten Bauteilen von Windenergieanlagen, vorzugsweise von Blattlagern von Windenergieanlagen, umfassend die Schritte Bereitstellen eines Ultraschallprüfkopfadapters insbesondere eines Ultraschallprüfkopfadapters nach den zuvor genannten Ausführungsformen, Anordnen des Ultraschallprüfkopfadapters an einem Prüfkörper, insbesondere an einer Außenverzahnung des Prüfkörpers, senden eines Schallimpulses durch den Ultraschallprüfkopfadapter in dem Prüfkörper und Empfangen eines Echoimpulses zur Detektion einer Fehlstelle in Material des Prüfkörpers.

Das Anordnen des Ultraschallprüfkopfadapters an einem Prüfkörper erfolgt insbesondere derart, dass die Zähne des Ultraschallprüfkopfadapters und die Zähne der Außenverzahnung des Prüfkörpers ineinandergreifen. Vorzugsweise ist zwischen den Zähnen des Ultraschallprüfkopfadapters und den Zähnen des Prüfkörpers ein Kontakt hergestellt. Alternativ vorzugsweise ist der Ultraschallprüfkopfadapter beabstandet von der Außenverzahnung des Prüfkörpers, sodass zwischen dem Prüfkörper und dem Ultraschallprüfkopfadapter ein Freiraum besteht, wobei auch hier vorzugsweise die Zähne der Prüfverzahnung zumindest teilweise in den Zahnlücken der Verzahnung des Prüfkörpers angeordnet sind. Der dadurch entstehende Freiraum kann dann beispielsweise und bevorzugt mit einem Medium aufgefüllt sein. Dieses Medium kann insbesondere Öl und/oder Wasser sein. Das Senden des Schallimpulses durch den Ultraschallprüfkopfadapter in den Prüfkörper erfolgt vorzugsweise durch einen Ultraschallprüfkopf, der auf der Prüfkopfseite des Ultraschallprüfkopfadapters angeordnet ist. Ferner vorzugsweise erfolgt das Senden des Schallimpulses durch einen verfahrenden Ultraschallprüfkopf.

Das Anordnen des Ultraschallprüfkopfadapters kann ferner vorzugsweise abschnittsweise erfolgen. In diesem Fall ist der Ultraschallprüfkopfadapter beispielsweise als Ringsegment ausgebildet, sodass der Ultraschallprüfkopfadapter lediglich einen Abschnitt des Prüfkörpers bedeckt. Alternativ vorzugsweise ist der Ultraschallprüfkopfadapter als Ring ausgebildet, sodass der Ultraschallprüfkopfadapter den Prüfkörper vollständig umschließt. Dieses Umschließen ist insbesondere dahingehend zu verstehen, dass der gesamte Umfang des Prüfkörpers von dem Ultraschallprüfkopfadapter umschlossen wird.

Das Empfangen des Echoimpulses, insbesondere zur Detektion einer Fehlstelle im und/oder am Material des Prüfkörpers, erfolgt beispielsweise entweder durch den zuvor genannten Ultraschallprüfkopf oder durch einen separaten Echoimpulsempfangskopf, der beispielsweise einen Schallsensor umfasst. Das Empfangen des Echoimpulses dient insbesondere der Detektion von Fehlstellen, sodass eine geeignete Auswertung dieses Echoimpulses im Anschluss an das Empfangen bevorzugt ist. Insbesondere ist es bevorzugt, dass diese Auswertung eine Fehlstelle im Material aufzeigt und ferner vorzugsweise die Lage dieser Fehlstelle im Material ausweist.

In einer bevorzugten Ausführungsform des Ultraschallprüfverfahrens ist vorgesehen, dass der Prüfkörper ein Element einer Windenergieanlage, insbesondere mit einer Außenverzahnung einer Windenergieanlage, ist. Die Anwendung dieses Verfahrens und/oder des Ultraschallprüfkopfadapters im Bereich von Windenergieanlagen ist besonders bevorzugt. Aufgrund der Größe von Windenergieanlagen beziehungsweise der einzelnen Komponenten von Windenergieanlagen, ist deren Demontage mit einem großen Aufwand verbunden. Durch das erfindungsgemäße Verfahren sowie durch den erfindungsgemäßen Ultraschallprüfkopfadapter besteht die Möglichkeit, dass eine Ultraschallprüfung vor Ort an der Windenergieanlage durchgeführt werden kann.

Durch eine derartige Prüfung können nicht nur die Vorteile der zuvor beschriebenen Ultraschallprüfung genutzt werden, sondern es können zumindest dahingehend Kosten eingespart werden, indem die Windenergieanlage nicht oder lediglich teilweise demontiert werden muss. Eine Voraussetzung zur Anwendung des Verfahrens bei Windenergieanlagen ist, dass die Windenergieanlage im Wesentlichen still steht.

Eine weitere besonders bevorzugte Ausführungsform des Ultraschallprüfverfahrens sieht vor, dass zwischen dem Ultraschallprüfkopfadapter und dem Prüfkörper ein Schmiermittel, insbesondere ein Öl, angeordnet wird. Das zuvor beschriebene Ultraschallprüfverfahren kann insbesondere zur Detektion von Rissen im Bereich von Löchern, die im Prüfkörper angeordnet sind, genutzt werden. Da Risse in Materialien, insbesondere an Kerben, wie beispielsweise Löcher, entstehen, ist das Verfahren hierfür besonders geeignet.

Gemäß einer weiteren besonders bevorzugten Ausführungsform des Ultraschallprüfverfahrens, umfasst dieses die zusätzlichen Schritte Herausfahren eines verzahnten Abschnitts eines Windenergieanlagebauteils aus seinem Betriebsbereich, vorzugsweise aus einem Betriebsbereich eines Pitchmotors, und Prüfen des Betriebsbereiches mit den Schritten nach mindestens einem der vorhergehenden Ausführungsvarianten des Ultraschallprüfverfahrens. Pitchmotoren dienen der Drehung eines Windenergieanlagenblattes um eine longitudinale Achse. Da diese Drehung in der Regel lediglich in einem kleinen Winkelbereich und nicht um eine gesamte 360 Bogengrad Drehung erfolgt, wird eine Verzahnung am Windenergieanlagenblatt und/oder Blattlager, die zur Drehung des Windenergieanlagenblattes dient, insbesondere lokal belastet beziehungsweise beansprucht. An diesem lokalen Bereich verfährt in der Regel ein zur Verzahnung korrespondierendes Element eines Pitchmotors, der der Verstellung des Windenergieanlagenblattes dient. Eine Drehung des Windenergieanlagenblattes derart, dass dieses sich nicht in seinem üblichen Betriebsbereich befindet, resultiert darin, dass die Verzahnung, an der im Betrieb der Pitchmotor verfährt, insbesondere für eine Ultraschallprüfung zugänglich ist. Somit kann insbesondere dieser lokale Bereich mittels des Ultraschallprüfverfahrens gemäß einer der zuvor beschriebenen Ausführungsformen geprüft werden.

Gemäß einem weiteren Aspekt der vorliegenden Erfindung wird die eingangs genannte Aufgabe gelöst durch ein Ultraschallprüfsystem zur Detektion von Fehlstellen in verzahnten Prüfkörpern, insbesondere von außenverzahnten Prüfkörpern, umfassend ein Ultraschallprüfgerät, ausgebildet einen Schallimpuls zu senden und/oder zu empfangen, und ein Ultraschallprüfkopfadapter nach einer der zuvor genannten Ausführungsformen. Ein derartiges Ultraschallprüfsystem ist dahingehend vorteilhaft, dass dieses die zuvor genannten Vorteile des Ultraschallprüfverfahrens mit den ebenfalls genannten Vorteilen des Ultraschallprüfkopfadapters verbindet.

Für weitere Vorteile Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Ultraschallprüfkopfadapters verwiesen.

Eine bevorzugte Ausführungsform der Erfindung wird beispielhaft anhand der beiliegenden Figuren beschrieben. Es zeigen:
- Fig.1:: eine schematische Seitenansicht einer beispielhaften Ausführungsform eines erfindungsgemäßen Ultraschallprüfkopfadapters;
- Fig. 2:: eine schematische Draufsicht des Ultraschallprüfkopfadapters gemäß Figur 1;
- Fig.3:: ein Anwendungsbeispiel für einen erfindungsgemäßen Ultraschallprüfkopfadapter;
- Fig. 4:: einen Schadensfall im Anwendungsbereich eines erfindungsgemäßen Ultraschallprüfkopfadapters;
- Fig. 5:: eine weitere Ansicht des Schadensfalls gemäß Figur 4;
- Fig. 6:: eine Darstellung eines Ultraschallprüfergebnisses mittels eines erfindungsgemäßen Ultraschallprüfkopfadapters;
- Fig. 7:: eine schematische Ansicht eines Ultraschallprüfsystems.

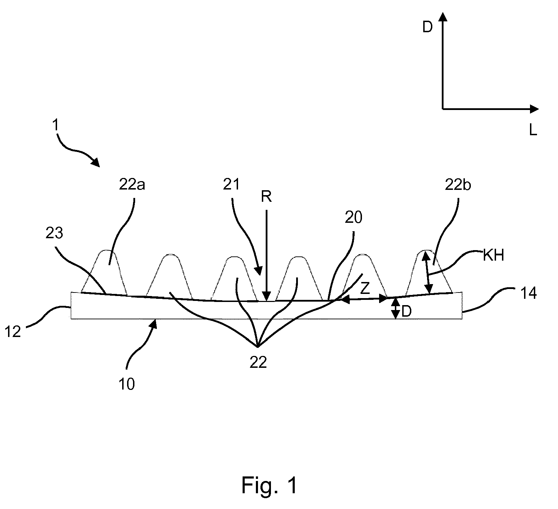

Figur 1 zeigt eine schematische Seitenansicht einer beispielhaften Ausführungsform eines erfindungsgemäßen Ultraschallprüfkopfadapters 1. Der Ultraschallprüfkopfadapter 1 weist einen Grundkörper und eine Prüfverzahnung 21 auf. Der Grundkörper wird gebildet durch eine Längserstreckung L, eine Dicke D und eine Breite B (hier nicht gezeigt). Die Längserstreckung L des Ultraschallprüfkopfadapters 1 erstreckt sich von einem ersten Ende 12 zu einem zweiten Ende 14. Orthogonal zu der Längserstreckung L weist der Ultraschallprüfkopfadapter 1 ferner die Dicke D auf. Die Dicke D erstreckt sich von einer Prüfkopfseite 10 bis zu einem Fußkreisdurchmesser 23 der Prüfverzahnung 21. Die Abmessung der Dicke D verändert sich entlang der Längserstreckung L, so das mit der orthogonal zur Dicke D und orthogonal zur Längserstreckung L ausgerichteten Breite B und dem im Wesentlichen in Längsrichtung verlaufenden Fußkreisdurchmesser 23 die konkav ausgebildete Prüfkörperseite 20 gebildet wird.

Auf der Prüfkörperseite 20 ist die Prüfverzahnung 21 angeordnet. Die Prüfverzahnung 21 umfasst die einzelnen Zähne 22, 22a, 22b, die mit einem konstanten Abstand nebeneinander entlang des Fußkreisdurchmessers 23 angeordnet sind. Dabei ist die Erstreckung der Zahndicke Z im Wesentlichen parallel zum Fußkreisdurchmesser 23 an der Prüfkörperseite 20. Darüber hinaus weist eine Kopfhöhe KH der Zähne 22, 22a, 22b, die sich jeweils vom Zahnfuß zum Zahnkopf erstreckt, eine konstante Abmessung auf.

Auf der gegenüberliegenden Seite von der Prüfkörperseite 20 erstreckt sich die Prüfkopfseite 10. Die Prüfkopfseite 10 erstreckt sich von dem ersten Ende 12 zum zweiten Ende 14 des Ultraschallprüfkopfadapters 1. Die Prüfkopfseite 10 weist eine plane Fläche auf, so dass diese im Gegensatz zur Prüfkörperseite 20 keinen Radius R aufweist.

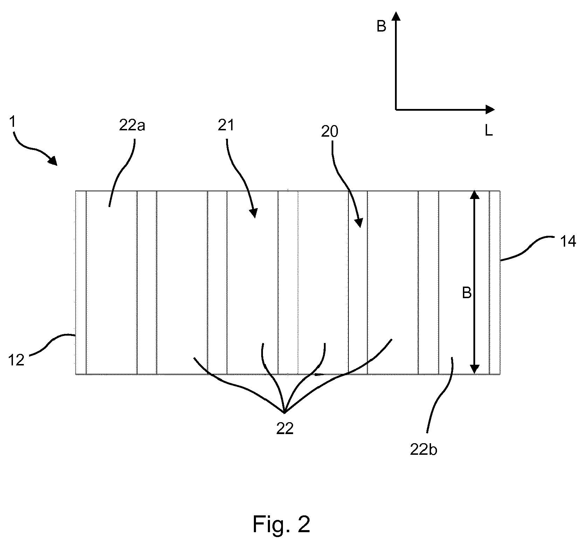

Figur 2 zeigt eine schematische Draufsicht des Ultraschallprüfkopfadapters 1 gemäß Figur 1. Die Breite B erstreckt sich erfindungsgemäß orthogonal zur Längserstreckung L sowie orthogonal zur Dicke D. Die Zähne 22, 22a, 22b erstrecken sich über die gesamte Breite B des Ultraschallprüfkopfadapters. Ferner zeigt Figur 2, dass an das erste Ende 12 ein Bereich angrenzt, an dem wiederum der erste Zahn 21a angrenzt. Ferner grenzt an das zweite Ende 14 ebenfalls ein Bereich, an den der letzte Zahn 21b angrenzt.

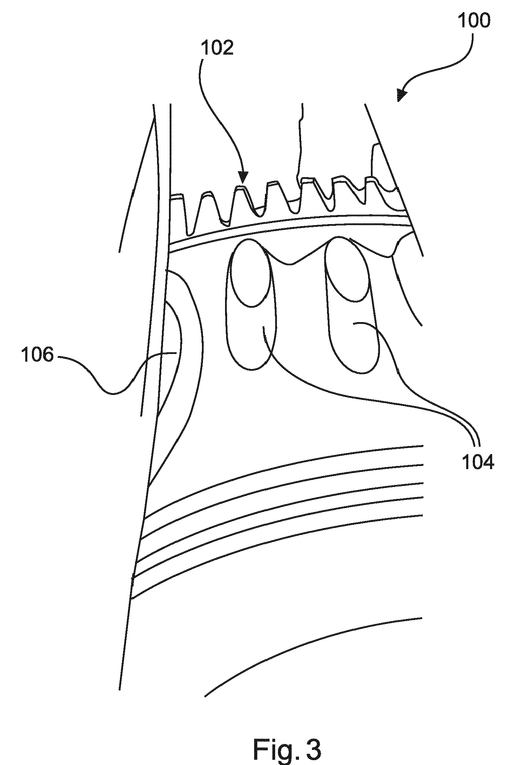

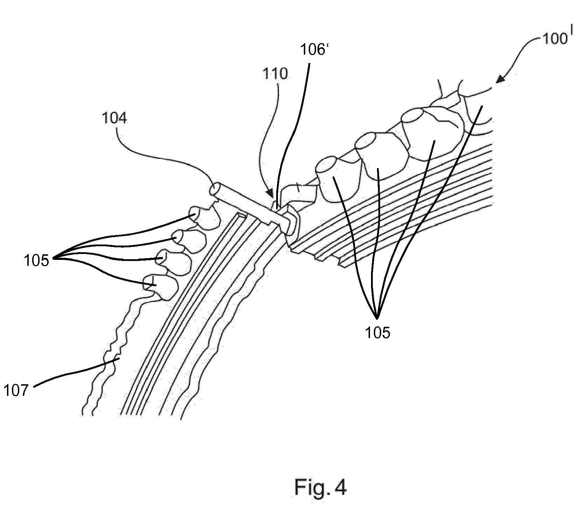

Figur 3 zeigt ein Anwendungsbeispiel für einen erfindungsgemäßen Ultraschallprüfkopfadapter 1. Das Anwendungsbeispiel zeigt ein Blattlager 100 mit einer Außenverzahnung 102 sowie in Befestigungsbohrungen 106 angeordnete Stehbolzen 104. Figur 4 zeigt ferner einen Schadensfall im Anwendungsbereich eines erfindungsgemäßen Ultraschallprüfkopfadapters 1. Der Schadensfall zeigt ein Blattlager 100', das an einer Schadensstelle 110 auseinandergebrochen ist. Die Schadensstelle 110 führt durch eine Befestigungsbohrung 106' in Richtung einer orthogonal zur Längserstreckung der Befestigungsbohrung 106' führenden Richtung. An einer Hälfte der auseinander gebrochenen Befestigungsbohrung 106' ist ferner einer der zuvor in der Befestigungsbohrung 106 ' angebrachten Stehbolzen 104 angeordnet. Durch den Schaden ist das Blattlager 100' von einem Turm einer Windenergieanlage auf den Boden im Umfeld der Windenergieanlage gefallen. Dadurch sind Teile des Blattlagers 100' mit einem Schlamm 107 bedeckt. Der Schlamm 107 ist insbesondere eine von Wasser, beispielsweise von Regenwasser, aufgeweichte Erde. Insbesondere sind einige Stehbolzen 105 von dem Schlamm 107 bedeckt bzw. der Schlamm ist an einigen Stellen dieser verschlammten Stehbolzen 105 verortet.

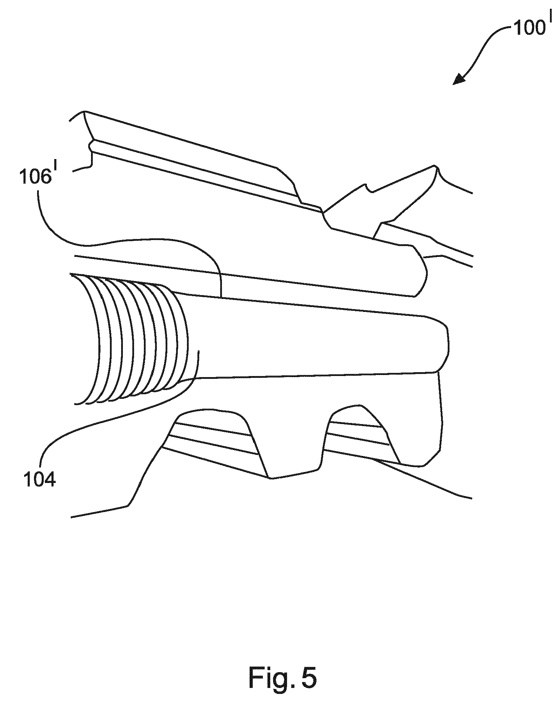

Figur 5 zeigt eine weitere Ansicht des Schadensfalls gemäß Figur 4, wobei hier die Hälfte der auseinandergebrochenen Befestigungsbohrung 106' dargestellt ist, in der auch in diesem auseinandergebrochenen Zustand der Stehbolzen 104 angeordnet ist.

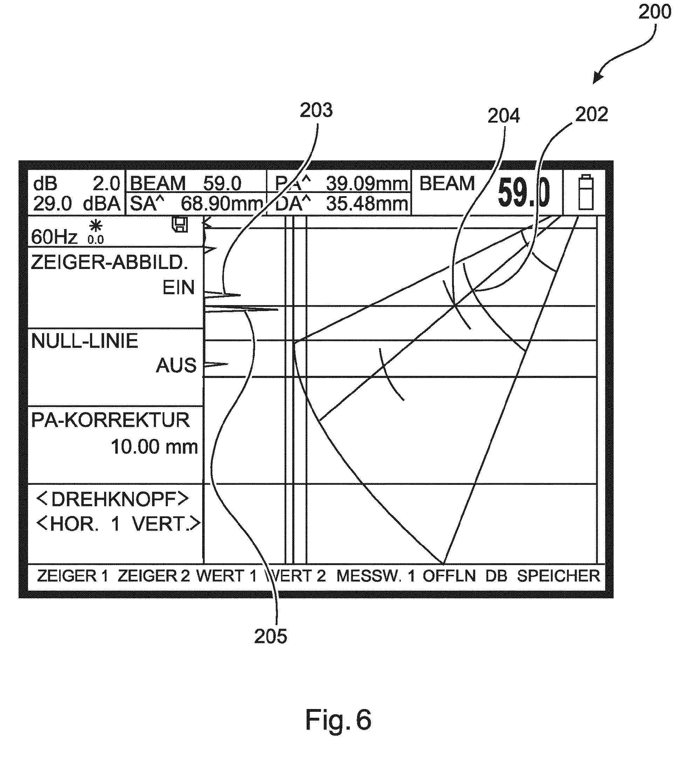

Figur 6 zeigt eine graphische Darstellung eines Ultraschallprüfergebnisses mittels eines erfindungsgemäßen Ultraschallprüfkopfadapters 1. Die Prüfergebnisdarstellung 200 zeigt das Ergebnis der Ultraschallprüfung, insbesondere der Ultraschallprüfung, die mittels des erfindungsgemäßen Ultraschallprüfkopfadapters 1, an einem Blattlager 100, 100' mit einer oder mehreren Befestigungsbohrungen 106, 106'. Die Prüfergebnisdarstellung 200 umfasst daher eine Lochdetektion 202 der Befestigungsbohrung 106, 106' mit einer geringen Amplitude 203. Ferner umfasst die Prüfergebnisdarstellung 200 eine Rissdetektion 204 mit einer großen Amplitude 205.

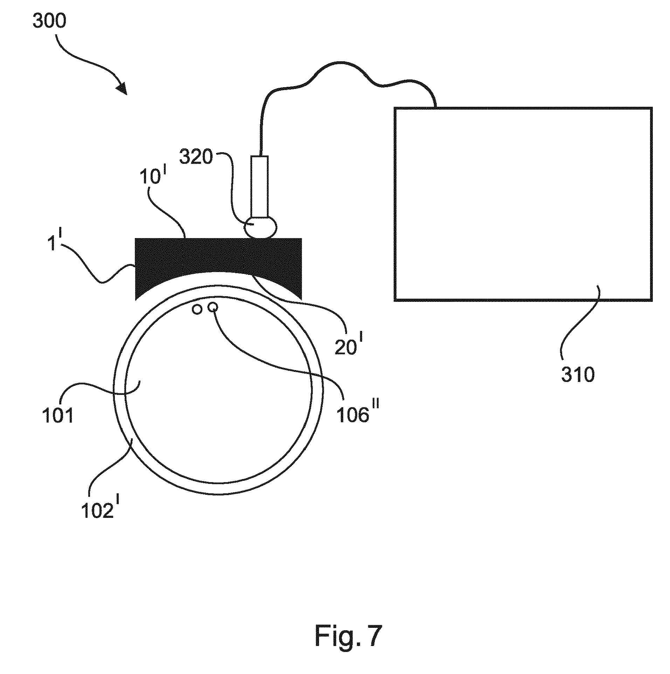

Figur 7 zeigt eine schematische Ansicht eines Ultraschallprüfsystems 300 mit einem Ultraschallprüfgerät 310 und einem Ultraschallprüfkopf 320. Der Ultraschallprüfkopf 320 ist ferner auf der horizontalen und im Wesentlichen planen Prüfkopfseite 10' des Ultraschallprüfkopfadapters 1' angeordnet. Der Ultraschallprüfkopfadapter 1' ist ferner mit seiner Prüfkörperseite 20' an einer Außenverzahnung 102' des Prüfkörpers 101 angeordnet. Durch diese Anordnung können vom Ultraschallprüfgerät 310 gesteuerte Ultraschallimpulse durch den Ultraschallprüfkopf 320 und durch den Ultraschallprüfkopfadapter 1' hindurch in den Prüfkörper gesandt werden, so dass Materialfehler und/oder -schäden, insbesondere im Bereich von Befestigungsbohrungen 106", detektiert werden können.

Der in den Figuren 1 und 2 dargestellte Ultraschallprüfkopfadapter 1 bietet somit den Vorteil einer Rissdetektion 204 in verzahnten Bauteilen 100. Zu diesem Zweck wird der Ultraschallkopfadapter 1 mit seiner Prüfkörperseite 20 auf und/oder in und/oder an der Außenverzahnung 102, 102' des Prüfkörpers angeordnet. Die Anordnung erfolgt insbesondere derart, dass die Zähne 22, 22a, 22b des Ultraschallprüfkopfadapters 1, in den Zahnlücken der Außenverzahnung 102, 102' des Blattlagers 100, 100' und/oder des Prüfkörpers 101 angeordnet sind. Einerseits kann die Anordnung derart erfolgen, dass die Zähne 22, 22a, 22b des Ultraschallprüfkopfadapters 1 sowie die Zähne der Außenverzahnung 102, 102' des Prüfkörpers 101 und/oder des Blattlagers 100, 100' einen direkten Kontakt aufweisen. Andererseits besteht die Möglichkeit, dass der Ultraschallprüfkopfadapter 1 von dem Prüfkörper 101 und/oder dem Blattlager 100, 100', insbesondere von der Außenverzahnung 102, 102', beabstandet ist. Diese Beanstandung kann beispielsweise mit Öl überbrückt werden.

Nachdem der Ultraschallprüfkopfadapter 1 wie im Vorherigen beschrieben an dem Prüfkörper 101 und/oder dem Blattlager 100, 100' angeordnet ist, verfährt ein Ultraschallprüfkopf 320 über die Prüfkopfseite 10 des Ultraschallprüfkopfadapters 1. Während der Ultraschallprüfkopf 320 derart verfährt, sendet dieser vorzugsweise Ultraschallimpulse aus. Durch die Auswertung des Echos, insbesondere der Amplituden 203, 205 des Echos, können unter anderem Schadensstellen im Inneren eines Bauteils detektiert werden. Durch die Detektion einer Schadensstelle, die sich im Inneren eines Bauteils befindet, kann die Zerstörung dieses Bauteils vorhergesagt und/oder vermieden werden. Durch diese Vorhersage können ferner Beschädigungen an Bauteilen, die mit dem geschädigten Bauteil korrespondieren, vermieden werden.

### Bezugszeichen

- 1, 1': Ultraschallprüfkopfadapter
- 10, 10': Prüfkopfseite
- 12: erstes Ende
- 14: zweites Ende
- 20, 20': Prüfkörperseite
- 21: Prüfverzahnung
- 22: Zahn
- 22a: erster Zahn
- 22b: letzter Zahn
- 23: Fußkreisdurchmesser
- 100, 100': Blattlager
- 101: Prüfkörper
- 102, 102': Außenverzahnung
- 104: Stehbolzen
- 105: verschlammter Stehbolzen
- 106, 106', 106": Befestigungsbohrung
- 107: Schlamm
- 110: Schadensstelle
- 200: Prüfergebnisdarstellung
- 202: Lochdetektion
- 203: kleine Amplitude
- 204: Rissdetektion
- 205: große Amplitude
- 300: Ultraschallprüfsystem
- 310: Ultraschallprüfgerät
- 320: Ultraschallprüfkopf
- B: Breite
- D: Dicke
- KH: Kopfhöhe
- L: Längserstreckung
- R: Radius Prüfkörperseite
- Z: Zahndicke

## Patentansprüche

1. Ultraschallprüfkopfadapter (1, 1`) für eine Ultraschallprüfung von verzahnten Prüfkörpern, insbesondere von außenverzahnten Prüfkörpern (100, 100', 101), umfassend
- eine Prüfkopfseite (10, 10'), welche während einer Ultraschallprüfung vorzugsweise einem Prüfkörper (100, 100`, 101) abgewandt ist,
- eine Prüfkörperseite (20, 20'), welche während einer Ultraschallprüfung vorzugsweise einem Prüfkörper (100, 100`, 101) zugewandt ist,
- wobei die Prüfkopfseite (10, 10') und Prüfkörperseite (20, 20') jeweils eine Längserstreckung (L) aufweisen,
- eine Dicke (D), welche sich von der Prüfkopfseite (10, 10') zur Prüfkörperseite (20, 20') erstreckt,
- eine Breite (B), welche sich orthogonal zur Dicke (D) und orthogonal zur Längserstreckung der Prüfkopfseite (10, 10') und/oder zur Längserstreckung der Prüfkörperseite (20, 20') erstreckt,
wobei auf der Prüfkörperseite (20, 20') eine Prüfverzahnung (21) angeordnet ist.

2. Ultraschallprüfkopfadapter (1, 1`) nach mindestens einem der vorhergehenden Ansprüche, wobei der Ultraschallprüfkopfadapter ein Plexiglas umfasst oder aus diesem besteht.

3. Ultraschallprüfkopfadapter (1, 1`) nach mindestens einem der vorhergehenden Ansprüche, wobei die Prüfkörperseite (20, 20') gegenüberliegend von der Prüfkopfseite (10, 10') angeordnet ist.

4. Ultraschallprüfkopfadapter (1, 1`) nach mindestens einem der vorhergehenden Ansprüche, wobei die Prüfkörperseite (20, 20') als konkave Fläche ausgebildet ist

5. Ultraschallprüfkopfadapter (1, 1`) nach mindestens einem der vorhergehenden Ansprüche, wobei dieser als Ring ausgebildet ist, so dass die Prüfkopfseite (10, 10') die Außenumfangsfläche und die Prüfkörperseite (20, 20') die Innenumfangsfläche ausbildet.

6. Ultraschallprüfkopfadapter (1, 1`) nach mindestens einem der vorhergehenden Ansprüche, wobei die Verzahnung (21) im Wesentlichen entlang der gesamten Erstreckung der Prüfkörperseite (20, 20') angeordnet ist.

7. Ultraschallprüfkopfadapter (1, 1`) nach mindestens einem der vorhergehenden Ansprüche, wobei Zahndicken (Z) von Zähnen (22, 22a, 22b) der Verzahnung (21) im Wesentlichen parallel zur Längserstreckung der Prüfkörperseite (20, 20') verlaufen.

8. Ultraschallprüfkopfadapter (1, 1`) nach mindestens einem der vorhergehenden Ansprüche, wobei die Prüfkopfseite (10, 10') derart ausgebildet ist, dass ein Ultraschallprüfkopf (320) angeordnet und/oder verfahren werden kann.

9. Ultraschallprüfkopfadapter (1, 1`) nach mindestens einem der vorhergehenden Ansprüche, wobei die Prüfkopfseite (10, 10') als plane Fläche ausgebildet ist.

10. Ultraschallprüfkopfadapter (1, 1`) nach mindestens einem der vorhergehenden Ansprüche, wobei die Prüfkopfseite (10, 10') als konvexe und/oder konkave Fläche ausgebildet ist.

11. Ultraschallprüfverfahren für verzahnte Prüfkörper, insbesondere von außenverzahnten Prüfkörpern (100, 100`, 101), umfassend die Schritte
- Bereitstellen eines Ultraschallprüfkopfadapters (1, 1`), insbesondere eines Ultraschallprüfkopfadapters nach den Ansprüchen 1-10,
- Anordnen des Ultraschallprüfkopfadapters (1, 1`) an einem Prüfkörper,
- Senden eines Schallimpulses durch den Ultraschallprüfkopfadapter (1, 1`) in den Prüfkörper,
- Empfangen eines Echoimpulses.

12. Ultraschallprüfverfahren nach dem vorhergehenden Anspruch, wobei der Prüfkörper ein Element einer Windenergieanlage, insbesondere ein Blattlager (100, 100') mit Außenverzahnung (102, 102') einer Windenergieanlage, ist.

13. Ultraschallprüfverfahren nach mindestens einem der vorhergehenden Ansprüche, wobei zwischen dem Ultraschallprüfkopfadapter (1, 1`) und dem Prüfkörper ein Schmiermittel, insbesondere ein Öl, angeordnet wird.

14. Ultraschallprüfverfahren nach mindestens einem der vorhergehenden Ansprüche, umfassend
- Herausfahren eines verzahnten Abschnitts eines Windenergieanlagenbauteils aus seinem Betriebsbereich, vorzugsweise aus einem Betriebsbereich eines Pitchmotors, und
- Prüfen des Betriebsbereich mit den Schritten nach mindestens einem vorhergehenden Anspruch 11-13.

15. Ultraschallprüfsystem (300) zur Detektion von Fehlstellen in verzahnten Prüfkörpern, insbesondere von außenverzahnten Prüfkörpern (100, 100', 101), umfassend
- ein Ultraschallprüfgerät (310) mit einem Ultraschallprüfkopf (320), ausgebildet einen Schallimpuls zu Senden und/oder zu empfangen, und
- ein Ultraschallprüfkopfadapter (1, 1`) nach mindestens einem der Ansprüche 1-10.
